# FASCICULE DE BREVET EUROPEEN

(11) **EP 3 519 260 B1**
(45) Date de publication et mention de la délivrance du brevet: **18.10.2023**
(21) Numéro de dépôt: 17746513.5
(22) Date de dépôt: 07.08.2017
(51) Int. Cl.: B60S 1/52, B60S 1/56

(54) **DISPOSITIF DE NETTOYAGE DESTINE A PROJETER AU MOINS UN FLUIDE VERS UNE SURFACE A NETTOYER D'UN VEHICULE AUTOMOBILE**
REINIGUNGSVORRICHTUNG ZUM AUFSPRÜHEN MINDESTENS EINER FLÜSSIGKEIT AUF EINE ZU REINIGENDE OBERFLÄCHE EINES KRAFTFAHRZEUGS
CLEANING DEVICE INTENDED FOR SPRAYING AT LEAST ONE FLUID ONTO A SURFACE TO BE CLEANED OF A MOTOR VEHICLE

(30) Priorité: 28.09.2016 FR 1659157
(43) Date de publication de la demande: 07.08.2019
(73) Titulaire: Valeo Systèmes d'Essuyage, 78322 Le Mesnil Saint Denis (FR)
(72) Inventeur: GRASSO, Giuseppe, 63500 Issoire (FR); KOLANOWSKI, Grégory, 63500 Issoire (FR); PICOT, Philippe, 63500 Issoire (FR); TREBOUET, Marcel, 78322 Le Mesnil Saint Denis (FR); VIEILLE, Jordan, 63500 Issoire (FR)
(74) Mandataire: Valeo Visibility
(86) Numéro de dépôt international: PCT/EP2017/069961
(87) Numéro de publication internationale: WO 2018/059806

(56) Documents cités:
- WO-A1-2017/045682
- FR-A1- 2 704 497
- JP-A- 2013 018 404
- US-A1- 2008 142 619

## Description

La présente invention se rapporte au domaine des dispositifs d'aide à la conduite et, plus particulièrement, au domaine des systèmes de détection optique utilisés à cette fin. L'invention concerne plus particulièrement les dispositifs de nettoyage configurés pour le nettoyage d'un capteur optique d'un tel système de détection optique.

On appelle système de détection optique tout système comportant des capteurs optiques tels que des caméras, des capteurs laser ou autres capteurs basés sur l'émission et/ou la détection de la lumière dans le spectre visible ou invisible pour l'Homme, en particulier l'infrarouge.

De tels systèmes de détection optiques équipent un nombre de plus en plus grand de véhicules automobiles afin d'aider le conducteur du véhicule dans certaines situations de conduite, dont une, bien connue, est l'aide au stationnement. Pour que cette aide soit la plus efficace possible, les données fournies par le dispositif de détection optique doivent être de la meilleure qualité possible, et il est donc indispensable de disposer d'optiques propres pour réaliser ces acquisitions de données. Pour ce faire, un dispositif de nettoyage d'un capteur du dispositif de détection optique (par exemple la surface optique extérieure d'une caméra de prise de vues) est agencé au voisinage du dispositif de détection optique afin de pouvoir injecter à la demande, sur ledit capteur, un fluide nettoyant juste avant que soit réalisée la détection (par exemple la prise de vue).

Un tel dispositif de nettoyage comporte notamment un corps d'acheminement de fluide de nettoyage à travers lequel du fluide de nettoyage est apte à circuler, en provenance d'un réservoir de stockage de fluide vers un élément de distribution, fixé à l'extrémité du corps d'acheminement et porteur de buses de projection. Le fluide est éjecté du dispositif via ces buses de projection, en direction du capteur optique à nettoyer.

Afin d'optimiser le nettoyage, il est notamment recherché une position optimale des buses de projection par rapport au capteur optique, afin que le fluide projeté sur le capteur ait le meilleur angle d'impact possible, et il est recherché un agencement des conduits internes dans l'élément de distribution qui autorise une circulation du fluide sans perte de charge pour favoriser une éjection sous pression de ce fluide vers le capteur optique.

On connaît classiquement des éléments de distribution disposés dans le prolongement axial du corps d'acheminement, avec un conduit de distribution creusé axialement dans l'élément de distribution et agencé parallèlement au canal de distribution formé à l'intérieur du corps d'acheminement. Des orifices de distribution sont percés depuis l'extérieur de l'élément de distribution jusqu'au conduit de distribution interne de sorte que le fluide peut sortir via ces orifices de distribution.

D'autres dispositifs de nettoyage sont décrits dans le document US2008/142619 A1.

L'invention vise à proposer une alternative aux constructions connues d'éléments de distribution, et plus particulièrement un dispositif de nettoyage, destiné à projeter au moins un fluide vers une surface à nettoyer d'un véhicule automobile, tel qu'un capteur optique d'un système de détection optique, le dispositif de nettoyage comprenant au moins un corps d'acheminement à l'intérieur du quel est ménagé un conduit de distribution et qui comporte à sa partie terminale de distribution un élément de distribution de fluide dans lequel est formé au moins une buse de projection de fluide de nettoyage, l'élément de distribution comportant un canal de distribution reliant fluidiquement le conduit de distribution ménagé dans le corps d'acheminement et la buse de projection.

Selon l'invention, l'élément de distribution de fluide de nettoyage est formé en deux parties, une première partie comportant une base de l'élément de distribution fixée au corps d'acheminement et une deuxième partie comportant un couvercle et plaquée contre la première partie.

Le plaquage l'une contre l'autre des première et deuxième parties de l'élément de distribution de fluide de nettoyage permet de former le canal de distribution, avec au moins l'une des première et deuxième parties présentant sur leur face en contact avec l'autre partie une empreinte. Le plaquage de cette empreinte ménagée dans une partie contre une face plane de l'autre partie contribue à former le canal de distribution du fluide de nettoyage.

Selon l'invention, chacune des première et deuxième parties de l'élément de distribution forme partie du canal de distribution par une empreinte aménagée dans leur face en contact, lesdites empreintes étant mises en regard l'une de l'autre.

Le plaquage l'une contre l'autre de ces parties, au niveau des faces de contact dans lesquelles sont aménagées ces empreintes, génère la mise en regard des deux empreintes pour former le canal de distribution. L'empreinte formant canal dans le couvercle et la deuxième partie est complémentaire de l'empreinte formant canal dans la base et la première partie.

Selon différentes caractéristiques de l'invention, prises seules ou en combinaison, on pourra prévoir que :
- l'au moins une buse de projection comporte une rampe formée en saillie de la face de contact du couvercle de l'élément de distribution ;
- la rampe est inclinée par rapport à l'axe d'extension du canal de distribution d'un angle compris entre 20° et 80°, notamment entre 30° et 60°, en particulier entre 40° et 50° ; plus particulièrement cet angle pourra être égal ou sensiblement égal à 45°, étant entendu qu'on considérera comme sensiblement égale à 45° par exemple une valeur de 42,5° ;
- La rampe s'étend notamment en saillie de cette plaque de fermeture d'au moins la hauteur et la largeur de l'orifice de distribution ;
- l'au moins une buse de projection comporte un conduit de sortie agencé dans le prolongement du canal de distribution ;
- le conduit de sortie est formé au moins en partie, voire totalement, dans l'épaisseur de la base ou du couvercle;
- le conduit de sortie s'étend le long d'un axe incliné d'un angle (β) compris entre 20° et 80°, notamment entre 30° et 60°, en particulier entre 40° et 50° par rapport à l'axe d'extension du canal de distribution qu'il prolonge ; on pourra notamment prévoir que le conduit de sortie présente un angle égal ou sensiblement égal à 45° avec le canal de distribution ;
- le conduit de sortie est disposé parallèlement au canal de distribution ;
- la section du conduit de sortie est inférieure à la section du canal de distribution, la section de chacun des conduits étant définie dans un plan perpendiculaire au sens d'écoulement du fluide à travers ces conduits ;
- l'élément de distribution comporte, à son extrémité libre, au moins un orifice de distribution de section transversale rectangulaire, carrée, ronde, ovale ou en demi-lune. D'autres formes pouvant néanmoins être envisagées sans sortir de l'invention ;
- le corps d'acheminement s'étend selon un axe d'allongement longitudinal et le canal de distribution s'étend dans une direction sensiblement perpendiculaire à cet axe d'allongement longitudinal ;
- l'élément de distribution de fluide présente une forme coudée ;
- le canal de distribution s'étend d'une extrémité proximale, en liaison fluidique avec le conduit de distribution du corps d'acheminement, à une extrémité distale, en liaison fluidique avec la ou les buses de projection ;
- l'élément de distribution est agencé en bout du corps d'acheminement de fluide de sorte que l'extrémité proximale du canal de distribution est disposée au droit du conduit de distribution ménagé dans le corps d'acheminement.
- l'extrémité proximale du canal de distribution présente une pente de guidage du fluide arrivant du conduit de distribution ménagé dans le corps d'acheminement ;
- la pente est formée dans l'empreinte ménagée dans le couvercle ; par pente, on entend aussi bien un plan incliné formant rampe régulière, par exemple à 45° par rapport à l'axe d'allongement du canal de distribution et donc par rapport à la direction d'arrivée du fluide dans l'élément de distribution, qu'une forme courbe : ces deux exemples donnés à titre indicatif permettent de limiter la perte de charge lors de l'arrivée du fluide sous pression contre la partie formant couvercle de l'élément de distribution en guidant le fluide de nettoyage jusqu'à la buse de projection.

Selon une caractéristique de l'invention, les première et deuxième parties de l'élément de distribution sont collées ou soudées notamment par ultrason ou par laser.

Et selon une autre caractéristique de l'invention, l'élément de distribution est agencé sensiblement perpendiculairement au corps d'acheminement de fluide.

D'autres caractéristiques, détails et avantages de l'invention et de son fonctionnement ressortiront plus clairement à la lecture de la description donnée ci-après à titre indicatif, en relation avec les figures annexées, dans lesquelles :
- la figure 1 est une vue en perspective d'un ensemble de détection pour véhicule automobile comportant un dispositif de détection optique et un dispositif de nettoyage selon l'invention, ici agencés en parallèle, le dispositif de nettoyage étant en position déployée pour projeter du fluide sur le dispositif de détection ;
- la figure 2 est une vue en coupe, suivant un plan de coupe comprenant les axes d'allongement des dispositifs de détection optique et de nettoyage, de l'ensemble de détection de la figure 1 ;
- la figure 3 est une vue éclatée de l'ensemble de détection de la figure 1, selon un même angle de perspective, dans laquelle il est notamment rendue visible la constitution en deux parties de l'élément de distribution qui est agencé en partie terminale du dispositif de nettoyage ;
- la figure 4 est une vue en coupe de la partie terminale du dispositif de nettoyage, illustrant plus particulièrement un élément de distribution en deux parties selon le principe de l'invention, configuré pour permettre l'éjection de fluide de nettoyage sur un capteur optique ;
- la figure 5 est une vue en perspective d'une des parties de l'élément de distribution, et notamment le couvercle, rendant visible la face interne de ce couvercle, à savoir la face amenée à être en contact avec l'autre partie de l'élément de distribution ;
- les figures 6 et 7 sont des vues en coupe de l'élément de distribution du dispositif de nettoyage, avant et après assemblage des deux parties constitutives formant base et couvercle ; et
- la figure 8 est une vue de face d'un véhicule automobile, dont la face avant est équipée d'un système de détection optique et d'un dispositif de nettoyage associé selon l'invention.

Il est tout d'abord à noter que si les figures exposent l'invention de manière détaillée pour sa mise en oeuvre, elles peuvent, bien entendu, servir à mieux définir l'invention le cas échéant. On comprendra également que le mode de réalisation de l'invention illustré par les figures est donné à titre d'exemple non limitatif.

Il est également rappelé que, dans la description qui suit, les dénominations "amont" et "aval" se réfèrent à la direction d'écoulement du fluide de nettoyage dans le dispositif de nettoyage de l'ensemble de détection à capteur optique selon l'invention. Ainsi, la dénomination "amont" se réfère au côté du dispositif de nettoyage par lequel ce fluide de nettoyage est admis en son sein, et la dénomination "aval" se réfère au côté du dispositif de nettoyage par lequel le fluide de nettoyage est distribué à l'extérieur de celui-ci, vers une surface d'un capteur optique d'un ensemble de détection optique d'un véhicule automobile.

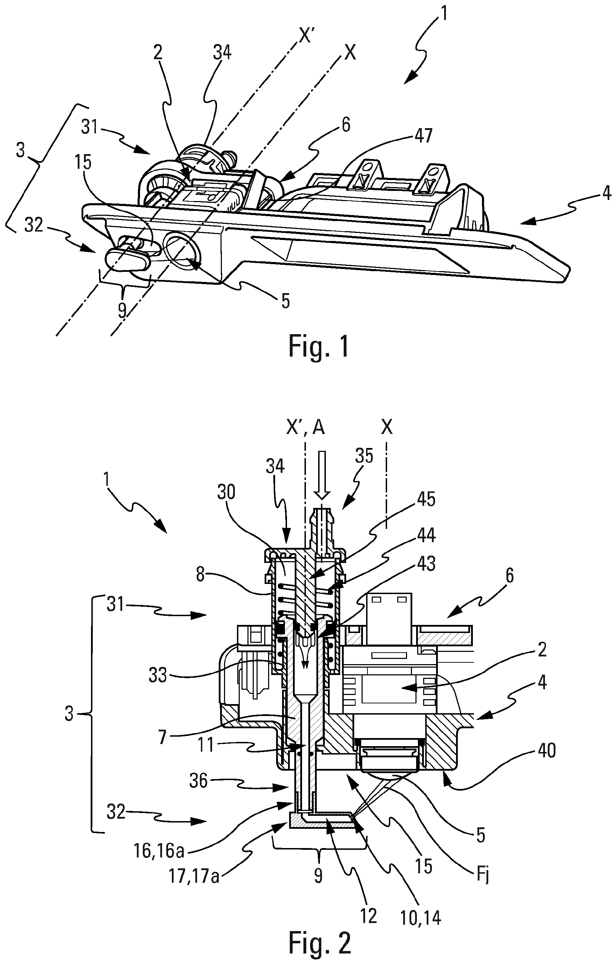

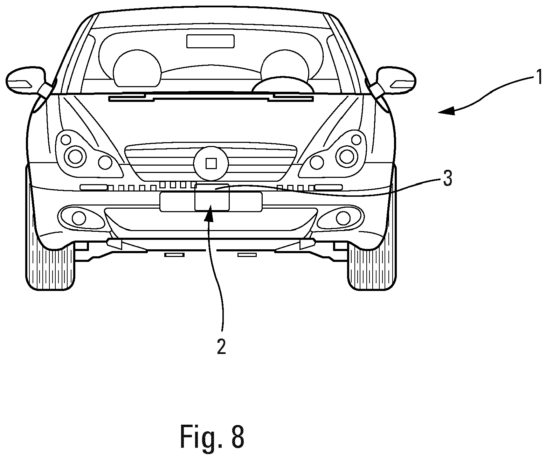

La figure 1 illustre un ensemble de détection à capteur optique 1 pour véhicule automobile comportant au moins un dispositif de détection optique 2 muni d'un capteur optique 5, de préférence une caméra, et un dispositif de nettoyage 3 du capteur optique 5. Les deux dispositifs sont montés dans des logements formés dans un boîtier commun 4 qui leur sont spécifiquement dédiés. On a illustré sur la figure 8 une vue d'un véhicule automobile sur lequel est installé un tel ensemble de détection à capteur optique 1, notamment ici dans la face avant.

Dans l'exemple illustré, le dispositif de détection optique 2 et le dispositif de nettoyage 3 s'étendent longitudinalement suivant deux axes d'allongement, respectivement (X) et (X'), sensiblement parallèles. L'axe d'allongement (X) du dispositif de détection optique 2 correspond ici à l'axe optique du capteur optique 5 et l'axe d'allongement (X') du dispositif de nettoyage 3 correspond ici, dans le cas d'un dispositif de nettoyage télescopique, à l'axe de déploiement de l'élément télescopique du dispositif de nettoyage. La figure 1 illustre une phase de nettoyage, au cours de laquelle l'élément télescopique du dispositif de nettoyage 3 est en position déployée de sorte qu'un élément de distribution 9 qu'il porte à son extrémité libre permette la projection d'un fluide de nettoyage sur le capteur optique 5.

Le dispositif de détection optique 2 et le dispositif de nettoyage 3 sont montés sur le boîtier commun 4 par l'intermédiaire d'un élément de support intermédiaire 6, qui comporte des moyens de réception de chacun des dispositifs ainsi que des moyens permettant la fixation sur le boitier commun.

En se référant notamment aux figures 1 et 2, on va décrire plus en détails les éléments constitutifs de l'ensemble de détection 1.

Le dispositif de nettoyage télescopique 3 présente une partie amont 31, comportant au moins un corps d'acheminement 8, formé d'au moins un corps creux à l'intérieur duquel un piston 7 est mobile entre une position rétractée et une position déployée (visible sur les figures 1 et 2), formant de la sorte l'élément télescopique du dispositif de nettoyage, ainsi qu'une partie aval 32 comportant au moins l'élément de distribution 9.

Dans la partie amont 31, le corps creux 8 présente une forme de révolution autour de l'axe longitudinal (X'), en étant fermé à une extrémité par une bride d'entrée 34 et en présentant à l'extrémité opposé un manchon 33 à l'intérieur duquel est apte à coulisser le piston 7. Un embout d'admission 35 de fluide est formé en saillie de la bride d'entrée 34 en étant excentré par rapport à l'axe longitudinal (X'). On décrira plus en détail ci-après les éléments constitutifs de cette partie amont 31, et notamment les moyens permettant le déplacement du piston 7 depuis une position extrême de repos à une position extrême déployée, mais il convient de noter tout d'abord que le corps d'acheminement de fluide comporte notamment une partie terminale de distribution 36 agencée à l'opposé de l'embout d'admission 35. Cette partie terminale de distribution 36 est percée de manière à présenter un conduit de distribution 11 par lequel le fluide de nettoyage s'écoule vers la partie aval 32 du dispositif de nettoyage, et notamment l'élément de distribution 9, en vue de sa projection sur le capteur optique.

Dans la partie aval 32, l'élément de distribution 9 est fixée à l'extrémité libre de la partie terminale de distribution 36 et il comporte au moins une buse de projection 10 de fluide de nettoyage et un canal de distribution 12 reliant fluidiquement le conduit de distribution 11 du piston 7 et la buse de projection 10, tel que cela est notamment visible sur la figure 2.

Dans le cas illustré, afin de simplifier l'assemblage de l'ensemble, on peut prévoir d'assembler dans un premier temps le corps d'acheminement 8 sur le boîtier commun au système de détection optique, puis de fixer, par encliquetage élastique, l'élément de distribution de fluides à la partie terminale de distribution 36 du piston 7 dépassant à travers une ouverture formée dans le boîtier.

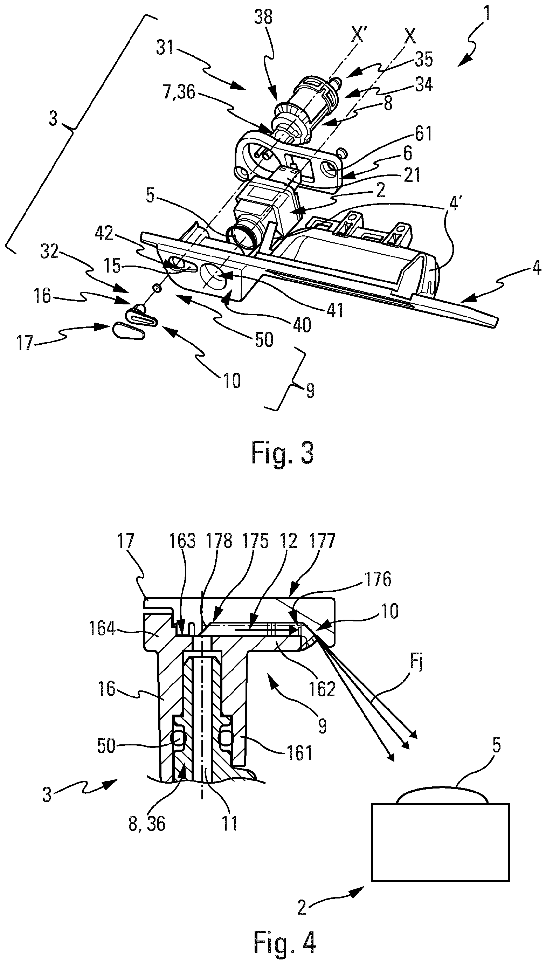

La figure 4 illustre la partie aval 32 du dispositif de nettoyage 3. Plus particulièrement la figure illustre l'élément de distribution 9, notamment de forme coudée, apte à être fixé, par exemple par encliquetage élastique, à la partie terminale de distribution 36 du piston 7 afin de relier fluidiquement le conduit de distribution 11 du piston 7 au canal de distribution 12. Le rattachement de l'élément de distribution 9 à la partie terminale de distribution 36 du piston 7 est rendu étanche par la présence d'un joint torique 50.

L'élément de distribution 9 s'étend, en particulier de par sa forme coudée, dans une direction sensiblement perpendiculaire à l'axe d'allongement longitudinal du corps d'acheminement de fluide 8. On comprend que le canal de distribution ménagé à l'intérieur de l'élément de distribution s'étend également perpendiculairement à cet axe d'allongement longitudinal.

Le boîtier commun 4 présente une zone de fixation à la structure du véhicule, comportant notamment un ou plusieurs organes de fixation 4', et une zone de réception des dispositifs de détection 2 et de nettoyage 3.

Cette zone de réception présente notamment une face avant 40, qui est tournée vers l'extérieur du véhicule lorsque le boîtier commun 4 est monté sur la structure du véhicule, sur laquelle débouche deux alésages, parmi lesquels un premier alésage forme un logement de réception 41 du capteur optique 5 et un deuxième alésage forme un logement de passage 42 dimensionné pour être traversé par le piston 7. Dans le mode de réalisation présenté ici, ces logements sont sensiblement circulaires et de diamètres différents.

Par ailleurs, le boîtier commun 4 comporte sur cette face avant 40 une cavité 15 agencée autour du deuxième alésage 42 et dont la forme et la dimension sont légèrement supérieures à celles de l'élément de distribution 9, de manière à former une cavité de réception de cet élément de distribution 9 lorsque le piston mobile 7 est en position de repos. Ainsi, il est possible d'escamoter complètement l'élément de distribution 9 dans le boîtier commun 4 lorsque le dispositif de nettoyage 3 n'est pas opérationnel, et donc de ne pas gêner l'acquisition de données par le dispositif de détection 2. Ceci est rendu possible notamment du fait de la forme coudée et donc de l'agencement sensiblement parallèle de l'élément de distribution 9 avec la face avant 40 du boîtier commun, qui permet de réaliser une empreinte d'épaisseur constante, égale à l'épaisseur de l'élément de distribution 9, pour former la cavité 15.

La figure 2 illustre l'ensemble de détection 1 de l'invention en phase de nettoyage au cours de laquelle le piston mobile 7, et donc l'élément de distribution 9 qu'il porte à son extrémité libre, est en position déployée, de sorte que l'élément de distribution est apte à projeter du fluide sur le capteur optique 5.

On a illustré par des flèches le trajet du fluide de nettoyage injecté dans le dispositif de nettoyage 3 par l'intermédiaire de l'embout d'admission 35. Le fluide est ainsi envoyé dans une chambre d'admission 30 délimitée latéralement par le corps creux et axialement par la bride d'entrée et par le piston mobile. On comprend que la dimension de la chambre d'admission varie en fonction du déplacement du piston mobile dans le corps creux. La pression exercée par le fluide de nettoyage pousse le piston 7 dans le corps creux, à l'opposé de la bride d'entrée 34, vers sa position déployée. La bride d'entrée 34 comporte une tige 45 qui s'étend sensiblement perpendiculairement à l'intérieur du corps creux et le long duquel le piston mobile 7 est guidé en coulissement entre la position extrême rétractée et la position extrême déployée, le piston mobile présentant une paroi interne agencée en regard de la tige 45. Dans le mode de réalisation, des canaux de passage 43 sont ménagés en partie supérieure amont du piston 7 de manière à déboucher sur la chambre d'admission 30, de sorte que le fluide de nettoyage est susceptible de passer entre la tige 45 et la paroi interne du piston 7 lorsque la position relative du piston par rapport à la tige le permet. Dans cette position, illustrée sur la figure 2, où l'extrémité aval des canaux de passage est dégagée, le fluide de nettoyage pénètre le conduit de distribution 11 ménagé dans le piston et dans la partie terminale de distribution 36, pour ensuite pénétrer dans l'élément de distribution 9. Un moyen élastique de rappel 44, ici un ressort de compression, est disposé dans le corps creux pour ramener en position extrême rétractée le piston dès lors que la pression exercée par le fluide de nettoyage est insuffisante.

Le piston 7 est mobile selon un axe longitudinal (A) parallèle à l'axe d'allongement (X) du dispositif de détection optique 2 et sensiblement identique à l'axe d'allongement (X').

Tel qu'il est notamment illustré sur la figure 4, l'élément de distribution 9, de forme coudée, est rattaché à la partie terminale de distribution 36 du piston 7 et s'étend dans une direction sensiblement perpendiculaire à l'axe longitudinal (A) de manière à ce que la ou les buses de projection 10 agencées à l'extrémité libre de l'élément de distribution 9 se trouvent à proximité immédiate d'une zone périphérique du capteur optique 5.

En d'autres termes, la forme coudée de l'élément de distribution 9 permet à la ou les buses de projection 10 d'être disposées entre l'axe d'allongement (X') du dispositif de nettoyage et l'axe d'allongement (X) du dispositif de détection, ce qui permet, dans le contexte d'un agencement du dispositif de nettoyage parallèle au dispositif de détection, de rapprocher la buse de projection 10 du capteur optique 5 à nettoyer.

L'élément de distribution 9 est constitué de deux parties distinctes, une première partie 16 comportant au moins une base 16a et une deuxième partie 17 comportant au moins un couvercle 17a, ces deux parties étant aptes à définir entre elles un canal de distribution 12 relié fluidiquement au conduit de distribution 11 du piston 7 et à la buse de projection 10. Cette dernière peut être ménagée dans la base 16a ou dans le couvercle 17a, ou formée à la jonction de ces deux parties.

Le canal est obtenu par la formation d'une empreinte dans au moins l'une de ces deux parties et par plaquage l'une contre l'autre des deux parties.

Les figures 4 à 7 illustrent plus en détails l'élément de distribution 9 à travers plusieurs variantes de réalisation, dans chacune desquelles cet élément de distribution est formé de deux parties distinctes.

Une première partie 16 comporte une base 16a de l'élément de distribution qui est fixée au corps d'acheminement de fluide 8 du dispositif de nettoyage, et plus particulièrement rattachée à la partie terminale de distribution 36 du piston 7. Une deuxième partie 17 comporte un couvercle 17a venant en recouvrement de la première partie. L'élément de distribution est formé par le plaquage des première et deuxième parties l'une contre l'autre, notamment au niveau de leur face d'extrémité libre amenées en contact l'une et l'autre, et par la fixation de l'une par rapport à l'autre. Notamment, on peut prévoir de coller le couvercle sur la base, ou bien de les assembler par l'intermédiaire de moyens de déformation élastique. Dans un mode de réalisation particulier, qui permet notamment d'assurer une fixation étanche et donc d'éviter les fuites de fluide devant circuler dans le canal de distribution 12, les deux parties sont soudées l'une sur l'autre, notamment par un procédé de soudage par ultrasons ou par un procédé de soudage au laser.

Les deux parties de l'élément de distribution 9 présentent respectivement, en section dans un plan perpendiculaire à l'axe d'allongement longitudinal du dispositif de nettoyage, des pourtours de forme et de dimensions aptes à coopérer.

La base 16a de l'exemple illustré comporte une portion de fixation 161, sous forme de fût cylindrique, à section de forme complémentaire à celle de la partie terminale de distribution 36 et une portion de support 162, configurée pour recevoir, sur sa face d'extrémité libre 163, tournée à l'opposé de la portion de fixation 161, le couvercle 17a. La portion de support 162 peut comprendre des bords périphériques 164, délimitant une cavité centrale de réception d'une partie du couvercle 17a.

Dans l'exemple illustré sur la figure 4, la face d'extrémité libre 163 offre, au centre de la cavité centrale de réception, une face de contact plane, dans laquelle le conduit de distribution 11 débouche.

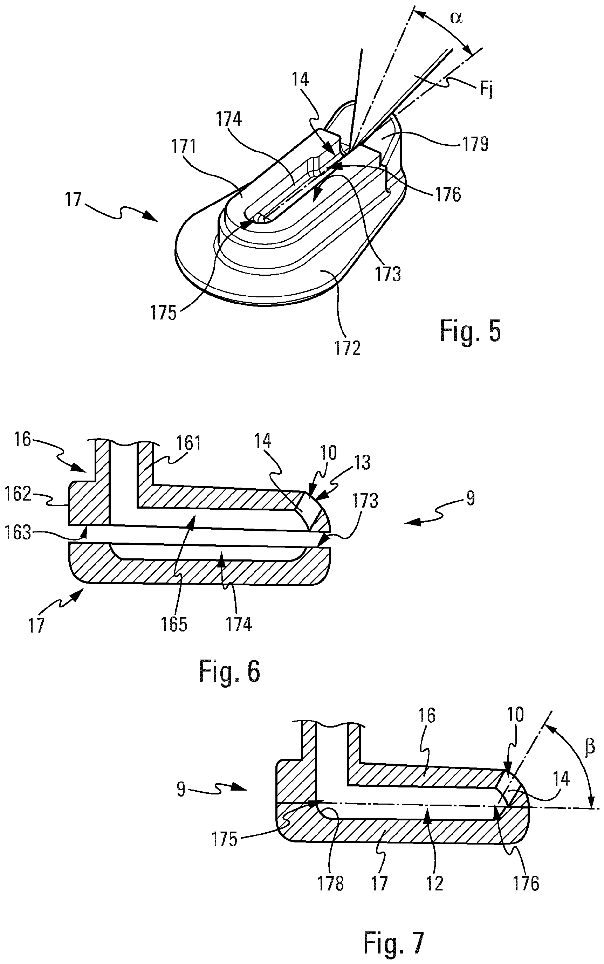

Le couvercle 17a, notamment visible sur la figure 5, comporte un manchon 171 et une plaque de fermeture 172 formant une collerette prolongeant radialement une extrémité du manchon.

Le manchon est dimensionné de manière à pouvoir venir loger dans la cavité de réception formé dans la base 16a autour de l'arrivée du conduit de distribution. Le manchon 171 présente une face d'extrémité libre 173, amenée à être en contact avec la face d'extrémité libre 163 de la base 16a.

Une empreinte 174 est ménagée dans le couvercle 17a, ici au niveau du manchon 171, sur la face d'extrémité libre 173. Cette empreinte 174 s'étend depuis une extrémité proximale 175 agencée dans l'épaisseur du couvercle jusqu'à une extrémité distale 176 formant partie de la ou des buses de projection 10. Lorsque l'élément de distribution est assemblé et fixé sur le corps d'acheminement de fluide du dispositif de nettoyage, le conduit de distribution 11 ménagé dans le piston 7, ou tout au moins dans la partie amont du dispositif de distribution, débouche sur cette empreinte 174 au niveau de l'extrémité proximale 175 et cette empreinte s'étend sensiblement perpendiculairement au conduit de distribution 11.

La plaque de fermeture 172 présente une face externe 177 qui est tournée vers l'extérieur du véhicule lorsque le dispositif est en position sur le véhicule. Cette face externe peut prendre indifféremment une forme plane ou bombée.

Selon l'invention, la face d'extrémité libre 173 du couvercle, ici la face interne du manchon, est placée contre la face d'extrémité libre 163 de la base, de sorte que l'au moins une empreinte, ici formée dans la face interne du couvercle, forme, une fois recouverte par la face de contact de l'autre partie, ici la base, le canal de distribution 12.

L'empreinte 174 participant à former le canal de distribution est réalisée par enlèvement de matière sur la face d'extrémité libre du couvercle 17a, ou bien par un procédé de moulage, simplifié du fait que l'empreinte est ouverte sur la face d'extrémité libre 173 du couvercle.

L'empreinte 174 présente, au droit de l'arrivée du fluide, c'est-à-dire au niveau de son extrémité proximale 175, une pente de guidage 178 apte à limiter la perte de charge lors de l'arrivée du fluide sous pression dans l'élément de distribution 9 contre le couvercle 17a et à accompagner ledit fluide jusqu'à l'extrémité distale 176 du canal de distribution 12, vers la buse de projection 10.

Cette pente de guidage 178 peut présenter la forme d'une rampe, ou plan incliné, tel qu'illustré sur la figure 4, ou bien présenter la forme d'une surface courbe, à titre d'exemple de section parabolique.

A l'extrémité distale 176 de l'empreinte 174, l'au moins une buse de projection 10 comporte un conduit de sortie 14 agencé dans le prolongement de l'empreinte participant à former le canal de distribution 12.

Afin d'augmenter la vitesse de sortie du fluide, on fait varier la section de passage entre le conduit de sortie 14 et le reste du canal de distribution 12 situé en amont, par rapport au sens d'écoulement du fluide, du conduit de sortie. Plus particulièrement, la section au niveau du conduit de sortie est inférieure à la section au milieu du canal de distribution. On comprend que la diminution de ces sections va, pour un débit de fluide de nettoyage constant, augmenter la vitesse de ce fluide dans l'élément de distribution, et donc augmenter la diffusion du jet de fluide Fj, illustré sur les figures 4 et 5, et l'impact de celui-ci sur le capteur optique 5 du système de détection. On améliore ainsi les performances de nettoyage.

A titre d'exemple non limitatif, on peut notamment prévoir que la section du canal de distribution 12, entre l'extrémité proximale et l'extrémité distale, présente sensiblement une largeur de 2.2mm et une profondeur de 1.4mm, et que la section du conduit de sortie 14 présente sensiblement une largeur de 1.4mm et une profondeur de 1.4 mm.

L'élément de distribution comporte à son extrémité libre un orifice de distribution 13 de section rectangulaire. En d'autres termes, le conduit de sortie 14 débouche, à l'extrémité libre de l'élément de distribution, en formant cet orifice de distribution 13 de section rectangulaire, et par exemple de section carré dans l'exemple précédemment donné.

La diffusion du jet en sortie de l'orifice de distribution 13 se fait au niveau des arêtes de la section de forme rectangulaire du conduit de sortie. Ces arêtes permettent de diriger la diffusion du jet de fluide de nettoyage, et l'on peut de la sorte former un jet segmenté, dit « Bar shape ».

Par ailleurs, la buse de projection 10 est configurée pour que le fluide puisse être éjecté avec un angle déterminé. Plus particulièrement, on peut prévoir que le conduit de sortie s'étende le long d'un axe incliné d'un angle β compris entre 20° et 80°, notamment entre 30° et 60°, en particulier entre 40° et 50°, voire égal ou sensiblement égal à 45°, et à titre d'exemple plus précis mais non limitatif égal à 42,5°, par rapport à l'axe d'extension du canal de distribution qu'il prolonge. De la sorte, on assure un impact du fluide de nettoyage sur le capteur optique 5 avec un angle par rapport à l'axe optique , en particulier lui aussi sensiblement égal à 45°, qui offre de bonnes conditions de nettoyage.

On a illustré sur les figures 4 et 5 des modes de réalisation de la buse de projection 10 qui comporte notamment une rampe 179 formant une surface inclinée est disposée en regard de l'orifice de distribution 13. La rampe 179 forme ainsi un obstacle à la circulation de fluide pour venir perturber le jet de fluide et le dévier, afin de créer une diffusion de type « deflected jet » du jet Fj. L'orientation de la surface inclinée disposée en travers de la circulation de fluide permet de garantir à la fabrication une précision d'angle contrôlée par les tolérances de production et donc une orientation de jet sur le capteur optique qui est parfaitement maitrisée.

La rampe 179 peut notamment être réalisée par une excroissance formée en saillie de la face de contact du couvercle 17a, ici de la plaque de fermeture 172, qui s'étend en saillie de cette plaque au moins sur la hauteur, ou profondeur, de l'empreinte 174 formée dans le couvercle 17a.

La rampe s'étend notamment en saillie de la deuxième partie 17 d'au moins la hauteur, voire d'au moins la hauteur et la largeur, de l'orifice de distribution 13.

A titre d'exemple, la rampe peut être inclinée par rapport à l'axe d'extension du canal de distribution d'un angle α compris entre 20° et 80°, notamment entre 30° et 60°, en particulier entre 40° et 50° et le cas échéant égal ou sensiblement égale à 45°,

Le principe du système de nettoyage du capteur laser est le suivant, dès lors que du fluide de nettoyage arrive dans le canal de distribution 12 de l'élément de distribution 9 via le corps d'acheminement de fluide 8 et le conduit de distribution 11. Le jet droit du fluide se trouvant dans le conduit de sortie 14 vient en contact avec une surface inclinée et paramétrée par un angle d'inclinaison défini afin de créer la diffusion du jet du fluide de nettoyage et de créer ainsi un spray recouvrant la surface de la surface optique extérieure de la caméra, notamment le cas échéant par le balayage télescopique du dispositif de nettoyage.

On a illustré sur les figures 6 et 7 une deuxième variante de réalisation de l'élément de distribution en deux parties selon l'invention. Dans cette variante, deux empreintes, une dans chaque partie 16, 17 de l'élément de distribution 9, sont réalisées pour former le canal de distribution 12.

Une première empreinte 165 est ménagée dans la base 16a et une deuxième empreinte 174 est ménagée dans le couvercle 17a, et comme précédemment, c'est le plaquage l'une sur l'autre des deux parties, au niveau de leur face de contact respective, à savoir leur face d'extrémité libre 163 et 173, qui permet de réaliser le canal de distribution. Les deux empreintes présentent des dimensions, en longueur et en largeur, sensiblement équivalentes, étant entendu que la profondeur, c'est à dire la dimension selon la direction perpendiculaire aux faces d'extrémité libre en contact des deux parties, peut varier d'une empreinte à l'autre.

Le canal de distribution 12 est prolongé comme précédemment par un conduit de sortie 14, qui dans cet exemple s'étend le long d'un axe incliné, en particulier d'un angle sensiblement égal à 45°, par rapport à l'axe d'allongement du canal de distribution 12. Dans cette variante, l'inclinaison du jet de fluide impactant le capteur optique est obtenue par l'agencement incliné du conduit de sortie 14.

Le conduit de sortie est ainsi formé par un alésage oblique essentiellement réalisé dans la base 16a de l'élément de distribution.

Il convient de noter que l'invention n'est pas limitée aux seuls modes de réalisation d'élément de distribution de dispositif de nettoyage explicitement décrits ci-dessus. A titre d'exemple de variante non exhaustif, on pourra notamment modifier la forme des pièces composant l'élément de distribution et/ou la forme des empreintes formant le canal de distribution, dès lors l'élément de distribution comporte une pluralité de pièces le composant et donc l'assemblage participe à former le canal de distribution. Pour des raisons de simplification de l'assemblage ou pour des raisons esthétiques, les deux parties de l'élément de distribution pourront présenter respectivement, en section dans un plan perpendiculaire à l'axe d'allongement longitudinal du dispositif de nettoyage, des pourtours de forme et de dimensions équivalentes.

## Revendications

1. Dispositif de nettoyage, destiné à projeter au moins un fluide vers une surface à nettoyer d'un véhicule automobile, tel qu'un capteur optique d'un système de détection optique, le dispositif de nettoyage (3) comprenant au moins un corps d'acheminement de fluide (8) à l'intérieur du quel est ménagé un conduit de distribution (11) et qui comporte à sa partie terminale de distribution (36) un élément de distribution (9) de fluide dans lequel est formé au moins une buse de projection (10) de fluide de nettoyage, l'élément de distribution (9) comportant un canal de distribution (12) relié fluidiquement au conduit de distribution (11) ménagé dans le corps d'acheminement de fluide (8) et à la buse de projection (10), l'élément de distribution (9) de fluide de nettoyage étant formé en deux parties (16, 17), une première partie (16) comportant une base (16a) de l'élément de distribution (9) fixée au corps d'acheminement (8) et une deuxième partie (17) comportant un couvercle (17a) plaquée contre la première partie, le canal de distribution (12) étant formé par le plaquage l'une contre l'autre des première et deuxième parties (16, 17) de l'élément de distribution (9) de fluide de nettoyage, au moins l'une des première et deuxième parties présentant sur leur face (163, 173) en contact une empreinte (165, 174), **caractérisé en ce que** chacune des première et deuxième parties (16, 17) de l'élément de distribution (9) forme partie du canal de distribution (12) par une empreinte (165, 174) aménagée dans leur face en contact, lesdites empreintes étant mises en regard l'une de l'autre.

2. Dispositif de nettoyage selon la revendication 1, **caractérisé en ce que** les première et deuxième parties (16, 17) de l'élément de distribution (9) sont assemblées l'une contre l'autre avec leur face de contact (163, 173) respective plaquées l'une contre l'autre, une des première et deuxième parties présentant une face de contact dans laquelle est ménagée une empreinte (165, 174) tandis que l'autre des première et deuxième parties présente une face de contact plane.

3. Dispositif de nettoyage selon l'une des revendications précédentes, **caractérisé en ce que** l'au moins une buse de projection (10) comporte une rampe (179) formée en saillie de la face de contact du couvercle (17a) de l'élément de distribution.

4. Dispositif de nettoyage selon la revendication précédente, **caractérisé en ce que** la rampe (179) est inclinée par rapport à l'axe d'extension du canal de distribution (12) d'un angle (α) compris entre 20° et 80°, notamment entre 30° et 60°, en particulier entre 40° et 50°.

5. Dispositif de nettoyage selon l'une des revendications précédentes, **caractérisé en ce que** l'au moins une buse de projection (10) comporte un conduit de sortie (14) agencé dans le prolongement du canal de distribution (12).

6. Dispositif de nettoyage selon la revendication précédente, **caractérisé en ce que** le conduit de sortie (14) est formé au moins en partie, voire totalement, dans l'épaisseur de la base (16a) ou du couvercle (17a).

7. Dispositif de nettoyage selon l'une des revendications 5 ou 6, **caractérisé en ce que** le conduit de sortie (14) s'étend le long d'un axe incliné d'un angle (β) compris entre 20° et 80°, notamment entre 30° et 60°, en particulier entre 40° et 50°, voire égal ou sensiblement égal à 45° par rapport à l'axe d'extension du canal de distribution (12) qu'il prolonge.

8. Dispositif de nettoyage selon l'une des revendications 5 à 7, **caractérisé en ce que** la section du conduit de sortie (14) est inférieure à la section du canal de distribution (12).

9. Dispositif de nettoyage selon l'une des revendications précédentes, **caractérisé en ce que** l'élément de distribution (9) comporte à son extrémité libre un orifice de distribution (13) de section transversale rectangulaire, carrée, ronde, ovale ou en demi-lune.

10. Dispositif de nettoyage selon l'une des revendications précédentes, dans lequel le corps d'acheminement s'étend selon un axe d'allongement longitudinal (A), **caractérisé en ce que** le canal de distribution (12) s'étend dans une direction sensiblement perpendiculaire à l'axe d'allongement longitudinal (A).

11. Dispositif de nettoyage selon l'une des revendications précédentes, **caractérisé en ce que** l'élément de distribution (9) de fluide présente une forme coudée.

12. Dispositif de nettoyage selon la revendication précédente, **caractérisé en ce que** l'extrémité proximale du canal de distribution (12) présente une pente de guidage (178) du fluide arrivant du conduit de distribution (11) ménagé dans le corps d'acheminement, la pente de guidage (178) étant de préférence formée dans l'empreinte (174) ménagée dans le couvercle (17a).

13. Dispositif de nettoyage selon l'une des revendications précédentes, **caractérisé en ce que** les première et deuxième parties (16, 17) sont collées ou soudées notamment par ultrason ou par laser.

## Patentansprüche

1. Reinigungsvorrichtung, die dazu bestimmt ist, mindestens ein Fluid auf eine zu reinigende Oberfläche eines Kraftfahrzeugs, wie einen optischen Sensor eines optischen Erfassungssystems, zu sprühen, wobei die Reinigungsvorrichtung (3) zumindest einen Fluidleitkörper (8) umfasst, in dessen Inneren eine Abgabeleitung (11) vorgesehen ist und der an seinem Abgabeendteil (36) ein Fluidabgabeelement (9) aufweist, in dem mindestens eine Sprühdüse (10) für Reinigungsfluid ausgebildet ist, wobei das Abgabeelement (9) einen Abgabekanal (12) aufweist, der fluidisch mit der im Fluidleitkörper (8) vorgesehenen Abgabeleitung (11) und der Sprühdüse (10) verbunden ist,
wobei das Abgabeelement (9) für Reinigungsfluid aus zwei Teilen (16, 17) ausgebildet ist, wobei ein erster Teil (16) eine am Leitkörper (8) befestigte Basis (16a) des Abgabeelements (9) aufweist und ein zweiter Teil (17) einen gegen den ersten Teil gepressten Deckel (17a) aufweist, wobei der Abgabekanal (12) durch das Zusammenpressen des ersten und des zweiten Teils (16, 17) des Abgabeelements (9) für Reinigungsfluid ausgebildet ist, wobei mindestens einer des ersten und des zweiten Teils auf ihrer sich berührenden Seite (163, 173) eine Vertiefung (165, 174) aufweist,
**dadurch gekennzeichnet, dass** jeder des ersten und des zweiten Teils (16, 17) des Abgabeelements (9) durch eine in ihrer Kontaktfläche vorgesehene Vertiefung (165, 174) einen Teil des Abgabekanals (12) bildet, wobei die Vertiefungen einander gegenüberliegend angeordnet sind.

2. Reinigungsvorrichtung nach Anspruch 1, **dadurch gekennzeichnet, dass** der erste und der zweite Teil (16, 17) des Abgabeelements (9) miteinander verbunden sind, wobei ihre jeweiligen Kontaktflächen (163, 173) gegeneinander gepresst sind, wobei einer des ersten und des zweiten Teils eine Kontaktfläche aufweist, in der eine Vertiefung (165, 174) vorgesehen ist, während der andere des ersten und des zweiten Teils eine ebene Kontaktfläche aufweist.

3. Reinigungsvorrichtung nach einem der vorangehenden Ansprüche, **dadurch gekennzeichnet, dass** die mindestens eine Sprühdüse (10) eine Rampe (179) aufweist, die von der Kontaktfläche des Deckels (17a) des Abgabeelements vorspringend ausgebildet ist.

4. Reinigungsvorrichtung nach dem vorangehenden Anspruch, **dadurch gekennzeichnet, dass** die Rampe (179) in Bezug auf die Erstreckungsachse des Abgabekanals (12) in einem Winkel (α) zwischen 20° und 80°, insbesondere zwischen 30° und 60°, ganz insbesondere zwischen 40° und 50°, geneigt ist.

5. Reinigungsvorrichtung nach einem der vorangehenden Ansprüche, **dadurch gekennzeichnet, dass** die mindestens eine Sprühdüse (10) eine Auslassleitung (14) aufweist, die in der Verlängerung des Abgabekanals (12) angeordnet ist.

6. Reinigungsvorrichtung nach dem vorangehenden Anspruch, **dadurch gekennzeichnet, dass** die Auslassleitung (14) zumindest teilweise oder sogar vollständig in der Dicke der Basis (16a) oder des Deckels (17a) ausgebildet ist.

7. Reinigungsvorrichtung nach einem der Ansprüche 5 oder 6, **dadurch gekennzeichnet, dass** sich die Auslassleitung (14) entlang einer Achse erstreckt, die um einen Winkel (β) zwischen 20° und 80°, insbesondere zwischen 30° und 60°, ganz insbesondere zwischen 40° und 50° oder sogar gleich oder im Wesentlichen gleich 45°, in Bezug auf die Erstreckungsachse des Abgabekanals (12), den sie verlängert, geneigt ist.

8. Reinigungsvorrichtung nach einem der Ansprüche 5 bis 7, **dadurch gekennzeichnet, dass** der Querschnitt der Auslassleitung (14) kleiner als der Querschnitt des Abgabekanals (12) ist.

9. Reinigungsvorrichtung nach einem der vorangehenden Ansprüche, **dadurch gekennzeichnet, dass** das Abgabeelement (9) an seinem freien Ende eine Abgabeöffnung (13) mit einem rechteckigen, quadratischen, runden, ovalen oder halbmondförmigen Querschnitt aufweist.

10. Reinigungsvorrichtung nach einem der vorangehenden Ansprüche, wobei sich der Leitkörper entlang einer Längsdehnungsachse (A) erstreckt, **dadurch gekennzeichnet, dass** sich der Abgabekanal (12) in einer zur Längsdehnungsachse (A) im Wesentlichen senkrechten Richtung erstreckt.

11. Reinigungsvorrichtung nach einem der vorangehenden Ansprüche, **dadurch gekennzeichnet, dass** das Fluidabgabeelement (9) eine abgewinkelte Form aufweist.

12. Reinigungsvorrichtung nach dem vorangehenden Anspruch, **dadurch gekennzeichnet, dass** das proximale Ende des Abgabekanals (12) eine Führungsschräge (178) für das aus der im Leitkörper vorgesehenen Abgabeleitung (11) ankommende Fluid aufweist, wobei die Führungsschräge (178) vorzugsweise in der im Deckel (17a) vorgesehenen Vertiefung (174) ausgebildet ist.

13. Reinigungsvorrichtung nach einem der vorangehenden Ansprüche, **dadurch gekennzeichnet, dass** der erste und der zweite Teil (16, 17) miteinander verklebt oder verschweißt sind, insbesondere durch Ultraschall oder durch Laser.

## Claims

1. Cleaning device intended for spraying at least one fluid towards a surface to be cleaned of a motor vehicle, such as an optical sensor of an optical detection system, the cleaning device (3) comprising at least one fluid conveying body (8) inside which a distribution duct (11) is formed and which has, at its terminal distribution part (36), a fluid distribution element (9) in which at least one cleaning fluid spraying nozzle (10) is formed, the distribution element (9) having a distribution channel (12) fluidically connected to the distribution duct (11) formed in the fluid conveying body (8) and to the spraying nozzle (10), the cleaning fluid distribution element (9) being formed in two parts (16, 17), a first part (16) having a base (16a) of the distribution element (9) that is fixed to the conveying body (8), and a second part (17) which has a cover (17a) and is pressed against the first part, the distribution channel (12) being formed by pressing the first and second parts (16, 17) of the cleaning fluid distribution element (9) one against the other, at least one of the first and second parts having an impression (165, 174) on its contact face (163, 173), **characterized in that** each of the first and second parts (16, 17) of the distribution element (9) forms part of the distribution channel (12) by way of an impression (165, 174) made in their contact face, these impressions facing towards one another.

2. Cleaning device according to Claim 1, **characterized in that** the first and second parts (16, 17) of the distribution element (9) are assembled one against the other with their respective contact faces (163, 173) pressed one against the other, one of the first and second parts having a contact face in which an impression (165, 174) is made while the other one of the first and second parts has a flat contact face.

3. Cleaning device according to either of the preceding claims, **characterized in that** the at least one spraying nozzle (10) has a ramp (179) which is formed in protrusion from the contact face of the cover (17a) of the distribution element.

4. Cleaning device according to the preceding claim, **characterized in that** the ramp (179) is inclined relative to the axis of extension of the distribution channel (12) by an angle (α) of between 20° and 80°, notably between 30° and 60°, in particular between 40° and 50°.

5. Cleaning device according to one of the preceding claims, **characterized in that** the at least one spraying nozzle (10) has an outlet duct (14) arranged in the continuation of the distribution channel (12).

6. Cleaning device according to the preceding claim, **characterized in that** the outlet duct (14) is formed at least partially, or even totally, in the thickness of the base (16a) or of the cover (17a).

7. Cleaning device according to either of Claims 5 and 6, **characterized in that** the outlet duct (14) extends along an axis which is inclined by an angle (β) which is between 20° and 80°, notably between 30° and 60°, in particular between 40° and 50°, or even equal or substantially equal to 45°, relative to the axis of extension of the distribution channel (12) which it continues.

8. Cleaning device according to one of Claims 5 to 7, **characterized in that** the cross section of the outlet duct (14) is less than the cross section of the distribution channel (12).

9. Cleaning device according to one of the preceding claims, **characterized in that** the distribution element (9) has, at its free end, a distribution orifice (13) of rectangular, square, round, oval or half-moon-shaped cross section.

10. Cleaning device according to one of the preceding claims, wherein the conveying body extends along an axis (A) of longitudinal extent, **characterized in that** the distribution channel (12) extends in a direction which is substantially perpendicular to the axis (A) of longitudinal extent.

11. Cleaning device according to one of the preceding claims, **characterized in that** the fluid distribution element (9) has a bent form.

12. Cleaning device according to the preceding claim, **characterized in that** the proximal end of the distribution channel (12) has a guide slope (178) for the fluid arriving from the distribution duct (11) formed in the conveying body, the guide slope (178) preferably being formed in the impression (174) formed in the cover (17a).

13. Cleaning device according to one of the preceding claims, **characterized in that** the first and second parts (16, 17) are adhesively bonded or welded, notably by ultrasound or by laser.
